# EUROPÄISCHE PATENTANMELDUNG

(11) **EP 2 226 527 A2**
(43) Veröffentlichungstag der Anmeldung: **08.09.2010**
(21) Anmeldenummer: 10001743.3
(22) Anmeldetag: 20.02.2010
(51) Int. Cl.: F16F 9/46

(54) **Kolben-Zylindereinheit**

(30) Priorität: 03.03.2009 DE 102009011325; 18.01.2010 DE 102010004975
(71) Anmelder: Stabilus GmbH, 56070 Koblenz (DE)
(72) Erfinder: Ehre, Thomas, 56072 Koblenz (DE); Oster, Peter, 56814 Bremm (DE); Wilbert, Markus, 56745 Volkesfeld (DE)

(57) **Zusammenfassung**

Die Erfindung bezieht sich auf eine Kolben-Zylindereinheit mit einem geschlossenen und mit einem unter Druck stehenden Fluid gefüllten Zylinder 1, dessen Innenraum durch einen in dem Zylinder axial verschiebbaren Kolben 2 in eine erste und eine zweite Arbeitskammer 3, 4 unterteilt ist. Einseitig ist an dem Kolben 2 eine Kolbenstange 5 angeordnet, die durch die zweite Arbeitskammer 4 hindurch und an der einen Stirnseite des Zylinders 1 abgedichtet nach außen geführt ist, wobei ein von der ersten zur zweiten Arbeitskammer 3, 4 führender Durchlaß 9 durch Bestromung eines elektrisch ansteuerbaren Magnetventils öffenbar ist und der Durchlaß 9 und das Magnetventil im Kolben 2 ausgebildet sind sowie der Durchlaß 9 durch ein zwischen einer Schließstellung einer Öffnungsstellung bewegbar antreibbares Ventilschließglied verschließbar ist. Das Magnetventil weist eine fest im Kolben 2 angeordnete, strombeaufschlagbare Spule 29 auf, in der ein Spulenkern 20 axial zur Bewegungsrichtung eines Ankers 25 angeordnet ist und der Spulenkern besteht aus einem fest im Kolben 2 angeordneten hülsenartigen äußeren Polkern 21 und einem von dem äußeren Polkern 21 umschlossenen zylinderartigen inneren Polkern 23, wobei der innere Polkern 23 an seiner äußeren Mantelfläche mit einem Außengewinde 24 versehen ist, mit dem der innere Polkern 23 in ein an der inneren Mantelfläche des äußeren Polkerns 21 ausgebildetes Innengewinde 22 eingeschraubt ist, oder der Anker 25 von einer zweiten strombeaufschlagbaren Spule 39 gebildet ist, wobei von der ersten Spule 29 und der zweiten Spule 39 einander anziehende Magnetfelder erzeugbar sind.

## Beschreibung

Die Erfindung bezieht sich auf eine Kolben-Zylindereinheit mit einem geschlossenen und mit einem unter Druck stehenden Fluid gefüllten Zylinder, dessen Innenraum durch einen in dem Zylinder axial verschiebbaren Kolben in eine erste und eine zweite Arbeitskammer unterteilt ist, mit einer einseitig an dem Kolben angeordneten Kolbenstange, die durch die zweite Arbeitskammer hindurch und an der einen Stirnseite des Zylinders abgedichtet nach außen geführt ist, wobei ein von der ersten zur zweiten Arbeitskammer führender Durchlaß oder Ventildurchgang durch Bestromung eines elektrisch ansteuerbaren Magnetventils öffenbar ist und der Durchlaß und das Magnetventil im Kolben ausgebildet sind sowie der Durchlaß durch ein zwischen einer Schließstellung und einer Öffnungsstellung bewegbar antreibbares Ventilschließglied verschließbar ist.

Derartige Kolben-Zylindereinheiten werden insbesondere zum Öffnen von Klappen, insbesondere von Heckklappen an Kraftfahrzeugen benutzt, wobei der Zylinder an einem feststehenden Bauteil und das freie Ende der Kolbenstange an das freie Ende der Klappe des Kraftfahrzeugs angelenkt ist.

Aufgabe der Erfindung ist es eine Kolben-Zylindereinheit der eingangs genannten Art zu schaffen, die einen geringen Bauraum erfordert und aus wenigen, einfachen Bauteilen besteht.

Diese Aufgabe wird erfindungsgemäß dadurch gelöst, daß das Magnetventil eine fest im Kolben angeordnete, strombeaufschlagbare Spule aufweist, in der ein Spulenkern axial zur Bewegungsrichtung eines Ankers angeordnet ist und der Spulenkern aus einem fest im Kolben angeordneten hülsenartigen äußeren Polkern und einem von dem äußeren Polkern umschlossenen zylinderartigen inneren Polkern besteht, wobei der innere Polkern an seiner äußeren Mantelfläche mit einem Außengewinde versehen ist, mit dem der innere Polkern in ein an der inneren Mantelfläche des äußeren Polkerns ausgebildetes Innengewinde eingeschraubt ist.

Durch diese Ausbildung ist der Schaltspalt des Magnetventils unabhängig von Bauteiltoleranzen reproduzierbar einstellbar, indem der innere Polkern so weit in den äußeren Polkern eingeschraubt wird, bis der Anker mit einem bestimmten Drehmoment am Ventilsitz anliegt. Danach wird der innere Polkern um einen Winkel zurückgedreht, um den Schaltabstand einzustellen. Eine Fixierung des inneren Polkerns kann dann z.B. durch Kleben oder verpressen erfolgen.

Die Aufgabe wird erfindungsgemäß ferner dadurch gelöst, daß das Magnetventil eine fest im Kolben angeordnete, strombeaufschlagbare Spule aufweist und ein Anker von einer zweiten strombeaufschlagbaren Spule gebildet ist, wobei von der ersten Spule und der zweiten Spule einander anziehende Magnetfelder erzeugbar sind.

Dies führt zu einer Verstärkung der Öffnungsbewegungskraft des Magnetventils.

In weiterer erfindungsgemäßer Ausgestaltung ist bei unbestromtem Magnetventil und einem eine bestimmte Druckdifferenz überschreitenden Druckgefälle von der zweiten Arbeitskammer zur ersten Arbeitskammer ein erster Ventildurchgang eines ersten Ventils zwischen der ersten Arbeitskammer und der zweiten Arbeitskammer sowie bei unbestromtem Magnetventil und einem eine weitere bestimmte Druckdifferenz überschreitenden Druckgefälle von der ersten Arbeitskammer zur zweiten Arbeitskammer ein zweiter Ventildurchgang eines zweiten Ventils zwischen der ersten Arbeitskammer und der zweiten Arbeitskammer öffenbar.

Damit ist auch bei Ausfall einer Energieversorgung des Magnetventils eine manuelle Verstellung der Kolben-Zylindereinheit in beide Bewegungsrichtungen möglich.

Erfindungsgemäß wird das zweite Ventil dadurch gebildet, daß der Kolben an seiner zylindrischen Mantelfläche eine radial umlaufende Ringnut aufweist, in der ein Dichtring axial beweglich angeordnet ist, der mit seinem äußeren radial umlaufenden Umfang mit Vorspannung an der Innenwand des Zylinders in Anlage ist und an seinem inneren radial umlaufenden Umfang im Bereich des Nutgrundes unterströmbar ist, wobei die der ersten Arbeitskammer zugewandte Nutseitenwand geschlossen ist und die der zweiten Arbeitskammer zugewandte Nutseitenwand im Bereich des Nutgrundes eine zur zweiten Arbeitskammer führende Strömungsverbindung aufweist.

Der Dichtring hat somit eine Doppelfunktion, indem er in der einen Position als Ventilglied dient und in der anderen Position die abdichtende Trennung der beiden Arbeitskammern bewirkt. Damit ist auch bei Ausfall einer Energieversorgung des Magnetventils eine manuelle Verstellung der Kolben-Zylindereinheit in beide Bewegungsrichtungen möglich.

Das zweite Ventil kann von einer in eine Beaufschlagungsrichtung wirkenden und in die entgegengesetzte Beaufschlagungsrichtung nichtwirkenden Dichtung gebildet sein.

Vorteilhafterweise kann an dem dem Anker abgewandten Ende der ersten Spule ein das Magnetfeld der ersten Spule verstärkender Dauermagnet angeordnet sein.

Zur weiteren Krafterhöhung kann an dem der ersten Spule abgewandten Ende der zweiten Spule ein das Magnetfeld der zweiten Spule verstärkender zweiter Dauermagnet angeordnet sein.

Eine andere Ausbildung besteht darin, daß der Durchlaß oder Ventildurchgang in einem ankerseitigen, zylindrischen Bereich des Kolbens radial nach außen mündet, wobei der zylindrische Bereich von dem ringförmig ausgebildeten Schließglied umschlossen und zwischen einer die Mündung des Durchlasses abdeckenden Schließstellung und einer die Mündung freilassenden Öffnungsstellung axial bewegbar ist und wobei das Schließglied durch den federbelasteten Anker in Schließrichtung beaufschlagt ist.

Zur Federbeaufschlagung des Ankers kann der Anker von einer am Spulenkern abgestützten Druckfeder in Schließrichtung des Ventilschließglieds beaufschlagt sein, wobei bei zweigeteiltem Spulenkern die Druckfeder an der ihr zugewandten ringartigen Stirnseite des äußeren Polkerns abgestützt sein kann.

Zu einer konzentrierten Führung der Feldlinien des Magnetfeldes und damit zu einer Verstärkung des auf den Anker wirkenden Magnetfeldes führt es, wenn die Spule von einem Magnetfeldführungsrohr umschlossen ist, wobei in Doppelfunktion der Zylinder das Magnetfeldführungsrohr bilden kann, wodurch sich der Durchmesser des Kolben-Zylinderaggregats kleiner halten lässt. Damit können bei hohen Stellkräften die das Magnetfeld erzeugenden Elemente und somit die gesamte Kolben-Zylindereinheit mit geringerer Baugröße ausgelegt werden.

Ausführungsbeispiele der Erfindung sind in der Zeichnung dargestellt und werden im folgenden näher beschrieben. Es zeigen
- Figur 1: eine Kolben-Zylindereinheit im Längsschnitt
- Figur 2: einen vergrößerten Ausschnitt im Bereich des Kolbens der Kolben-Zylindereinheit nach Figur 1 im Längsschnitt
- Figur 3: einen vergrößerten Ausschnitt im Bereich des Kolbens eines zweiten Ausführungsbeispiels einer Kolben-Zylindereinheit im Längsschnitt

Die in den Figuren dargestellten Kolben-Zylindereinheiten weisen einen mit einem unter Druck stehenden Fluid, insbesondere mit Gas gefüllten Zylinder 1 auf, der ein Magnetfeldführungsrohr bildet und dessen Innenraum durch einen in dem Zylinder 1 axial verschiebbaren Kolben 2 in eine erste Arbeitskammer 3 und eine zweite Arbeitskammer 4 unterteilt ist.

Einseitig ist an dem Kolben 2 eine Kolbenstange 5 befestigt, die durch die zweite Arbeitskammer 4 hindurch und an der einen Stirnseite des Zylinders 1 durch ein Dichtungs- und Führungspaket 6 abgedichtet nach außen geführt ist.

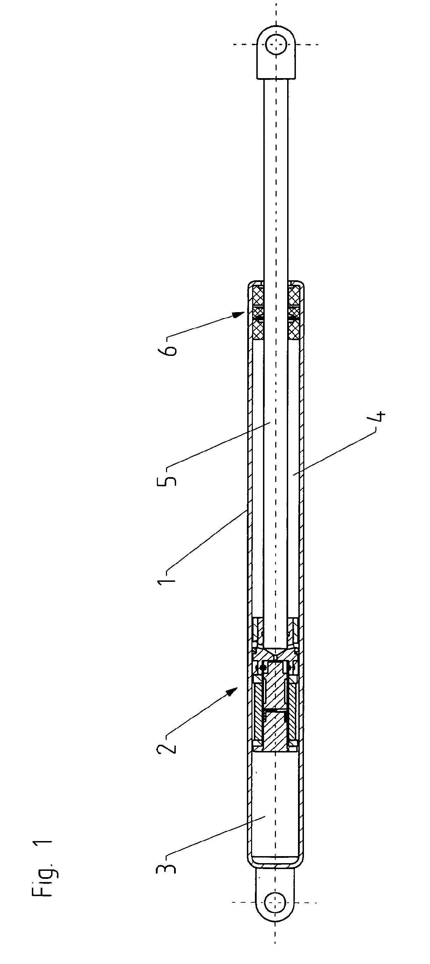

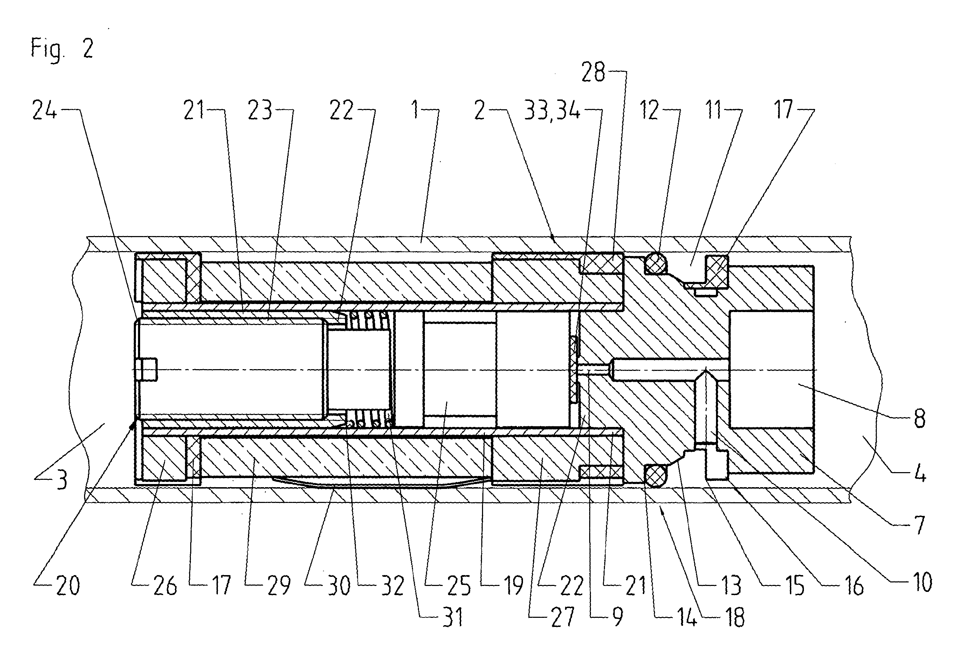

Bei dem Ausführungsbeispiel der Figuren 1 und 2 weist der Kolben 2 an seinem der zweiten Arbeitskammer 4 zugewandten Ende ein rotationssymmetrisches Halteteil 7 mit einer zur zweiten Arbeitskammer 4 hin offenen Grundbohrung 8 auf, in die das in den Zylinder 1 ragende Ende der Kolbenstange 5 hineinragt und befestigt ist. Von dem Bodenbereich der Grundbohrung 8 ist zentrisch in dem Halteteil 7 ein Ventildurchgang 9 ausgebildet, der die Grundbohrung 8 mit der der ersten Arbeitskammer 3 zugewandten Seite des Halteteils 7 verbindet. Von dem Ventildurchgang 9 geht in radialer Richtung eine Verbindungsbohrung 10 aus, die in eine radial umlaufende Ringnut 11 mündet, die an der zylindrischen Mantelfläche des Halteteils 7 ausgebildet ist. In der Ringnut 11 ist ein Dichtring 12 axial beweglich angeordnet, der mit seinem äußeren radial umlaufenden Umfang mit Vorspannung an der Innenwand des Zylinders 1 in Anlage ist und an seinem inneren radial umlaufenden Umfang im Bereich des Nutgrundes 13 der Ringnut 11 unterströmbar ist.

Dabei ist eine der ersten Arbeitskammer 3 zugewandte Nutseitenwand 14 geschlossen und eine der zweiten Arbeitskammer 4 zugewandte Nutseitenwand 15 weist im Bereich des Nutgrundes 13 eine zur zweiten Arbeitskammer 4 führende Strömungsverbindung 16 auf. Die zweite Nutseitenwand 15 ist durch einen Flansch einer nahe dem der zweiten Arbeitskammer 4 zugewandten Endbereich des Halteteils 7 fest angeordneten Führungsring 17 gebildet, der wie das Halteteil 7 vorzugsweise aus einem paramagnetischen Werkstoff besteht.

Durch die Ringnut 11 und den Dichtring 12 ist ein zweites Ventil 18 gebildet, das bei einem höheren Druck in der ersten Arbeitskammer 3 entgegen dem Druck in der zweiten Arbeitskammer 4 öffnet und die beiden Arbeitskammern 3 und 4 miteinander verbindet. An der der ersten Arbeitskammer 3 zugewandten Seite des Halteteils 7 ist ein konzentrisch im Zylinder 1 zur ersten Arbeitskammer 3 ragendes Rohr 19 befestigt.

In dem zur ersten Arbeitskammer 3 gerichteten Endbereich des Rohres 19 ist ein Spulenkern 20 fest angeordnet, der aus einem ferromagnetischen Werkstoff besteht. Erfindungsgemäß ist der Spulenkern 20 zweiteilig ausgebildet und besteht zum einen aus einem in das Rohr 19 eingepreßten hülsenartigen äußeren Polkern 21, der an seiner inneren Mantelfläche mit einem Innengewinde 22 versehen ist. Weiterhin besteht der Spulenkern aus einem zylinderartigen inneren Polkern 23, der mit seinem an seiner äußeren Mantelfläche ausgebildeten Außengewinde 24 in das Innengewinde 22 des äußeren Polkerns 21 so eingeschraubt und fixiert ist, daß der Schaltabstand zu einem Anker 25 exakt eingestellt ist.

Auf dem der ersten Arbeitskammer 3 zugewandten Ende des Rohres 19 ist eine erste ringförmige Stahlscheibe 26 und auf dem der zweiten Arbeitskammer 4 zugewandten Endbereich des Rohres 19 eine zweite ringförmige Stahlscheibe oder Stahlhülse 27 angeordnet.

Weiterhin ist zur zweiten Arbeitskammer 4 hin neben der ersten Stahlscheibe 26 noch ein Führungsring 28 aus einem nicht elektrisch leitenden Werkstoff angeordnet, mit dem der Kolben 2 im Zylinder 1 verschiebbar geführt ist.

Zwischen dem Führungsring 28 und der Stahlhülse 27 ist das Rohr 19 von einer Spule 29 umschlossen, die über einen Schleifkontakt 30 mit der Innenwand des Zylinders 1 leitend verbunden ist, wobei der Zylinder 1 eine Energiezuführleitung bildet.

An dem Spulenkern 20 ist eine in dem Rohr 19 angeordnete vorgespannte Schraubendruckfeder 31 mit ihrem einen Ende abgestützt, die mit ihrem anderen Ende einen im Wesentlichen als rotationssymmetrisches Bauteil ausgebildeten, im Rohr 19 verschiebbar geführten Anker 25 gegen das Halteteil 7 beaufschlagt. Die Schraubendruckfeder 31 ist dabei an der ringartigen Stirnfläche 32 des äußeren Polkerns 21 abgestützt.

In dem Anker 25 und dem Spulenkern 20 können nicht gezeigte Bohrungen oder Ausnehmungen vorgesehen sein, so daß der zur ersten Arbeitskammer 3 gerichtete Mündungsbereich des Ventildurchgangs 9 mit der ersten Arbeitskammer 3 verbunden ist.

Um die Stahlhülse 27 kann noch ein weiterer Führungsring 28 ausgebildet sein, so dass der Kolben 2 durch drei Führungsringe 28 aus einem elektrisch isolierenden Material im Zylinder 1 verschiebbar geführt ist. Um die Magnetkraft zu verstärken, können die Führungsringe 28 auch einen ferromagnetischen Innenring aufweisen, der von dem elektrisch isolierenden Material zur Verhinderung eines Kurzschlusses umgeben ist.

Die Polkerne 21 und 23, der Anker 25, die Stahlscheiben 26 und 27 und der Zylinder 1 bestehen aus einem ferromagnetischen Material. Das Rohr 19 besteht vorzugsweise aus einem ferromagnetischen Material, kann aber auch aus einem paramagnetischen Material gefertigt sein.

Die Energieversorgung der Spule 29 mit einer Gleichspannung von z.B. 12 V erfolgt um einen über den Zylinder 1 und den Schleifkontakt 30 und zum anderen über die Kolbenstange, das aus einem paramagnetischen Material bestehende Halteteil 7 und das Rohr 19.

Dabei kann die Geschwindigkeit durch ein pulsweitenmoduliertes Signal gesteuert werden.

An der der Mündung des Ventildurchgangs 9 zugewandten Stirnseite weist der Anker 25 eine Dichtung 33 auf, die ein Ventilschließglied 34 bildet und durch die der Ventildurchgang 9 verschließbar ist.

Bei unbestromter Spule 29 wird durch die Schraubendruckfeder 31 der Anker 25 gegen das Ventilschließglied 34 beaufschlagt, das damit den Ventildurchgang 9 schließend auf dessen Mündung gedrückt wird.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 18.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als in der ersten Arbeitskammer 3, öffnet das zweite Ventil 18 durch Bewegen des Dichtrings 12 von einer Anlage an der ersten Nutseitenwand 14 zur zweiten Nutseitenwand 15.

Ist der Druck in der zweiten Arbeitskammer 4 um einen bestimmten Betrag höher als der Druck in der ersten Arbeitskammer 3, wird das Ventilschließglied 34 von der Mündung des Ventildurchgangs 9 abgehoben und der Ventildurchgang 9 geöffnet.

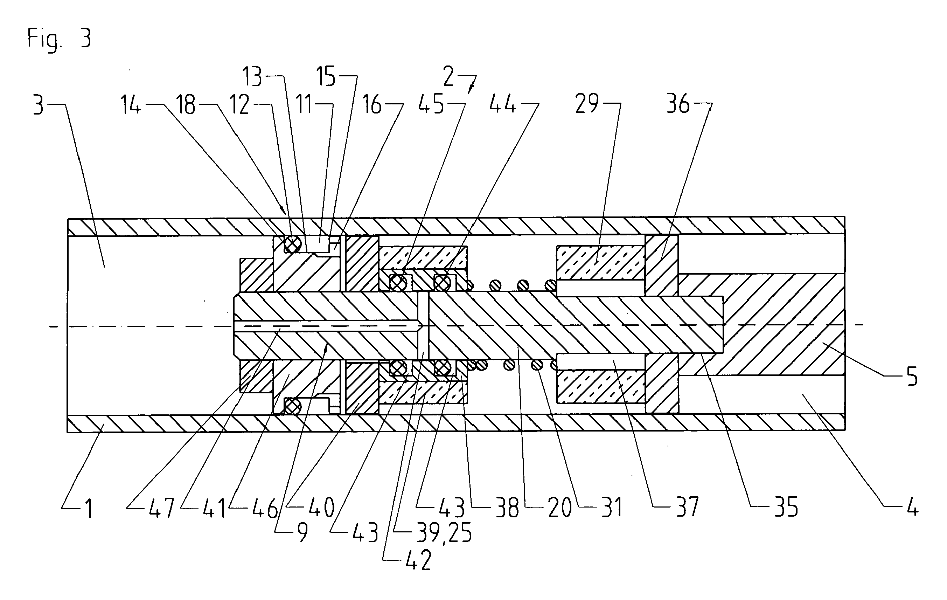

Bei dem Ausführungsbeispiel der Figur 3 ist das in den Zylinder 1 ragende Ende der Kolbenstange 5 mit einer koaxialen Bohrung 35 versehen, in die der Spulenkern 20 mit seinem einen Ende fest eingesetzt ist, so daß der bolzenartig ausgebildete Spulenkern 20 eine axiale Verlängerung der Kolbenstange 5 bildet.

An die Kolbenstange 5 anschließend, ist auf dem Spulenkern 20 eine erste Dauermagnetscheibe 36 angeordnet, neben der auf der der zweiten Arbeitskammer 4 abgewandten Seite feststehend eine erste Spule 29 koaxial den Spulenkern 20 umschließend angeordnet ist.

An dem die Spule 29 tragenden Spulenträger 37 ist eine den Spulenkern 20 mit Spiel umschließende Schraubendruckfeder 31 mit ihrem einen Ende abgestützt.

Mit ihrem anderen Ende liegt die vorgespannte Schraubendruckfeder 31 an einem ringartigen, den Spulenkern 20 umschließenden und auf diesem axial verschiebbar angeordneten Spulenkörper 38 an, der von einer zweiten strombeaufschlagbaren Spule 39 umwickelt ist, die einen Anker 25 bildet.

Auf der der ersten Spule 29 abgewandten Seite des Spulenkörpers 38 ist koaxial eine zweite Dauermagnetscheibe 40 angeordnet, die auch als Anschlag für eine Schließstellung dient.

In dem Spulenkern 20 ist ein Ventildurchgang 9 ausgebildet, der aus einer in die erste Arbeitskammer 3 mündenden Koaxialbohrung 41 besteht, von der Radialbohrungen 42 zur Mantelfläche des Spulenkerns 20 führen und dort nach außen münden.

Die Mündungen der Radialbohrungen 42 sind in der dargestellten Schließstellung des Spulenkörpers 38 von diesem abgedeckt und somit verschlossen.

In dieser Schließstellung des Spulenkörpers 38 ist der Spulenkern 20 axial beidseitig von einem Dichtring umschlossen, wobei jeder Dichtring in einer radial umlaufenden Nut 43 im Spulenkörper 38 angeordnet ist.

Der der ersten Spule 29 nähere Dichtring ist ein doppeltwirkender Dichtring 44 und der der ersten Spule 29 entferntere Dichtring ist ein einfachwirkender Dichtring 45. Der einfachwirkende Dichtring 45 dichtet nur in Richtung von der zweiten Arbeitskammer 4 zur ersten Arbeitskammer 3 ab, während der doppeltwirkende Dichtring 44 in beide Strömungsrichtungen abdichtet.

Auf dem zur ersten Arbeitskammer 3 gerichteten freien Ende des Spulenkerns 20 ist ein rotationssymmetrischer Ventilkörper 46 aus einem paramagnetischen Material angeordnet und durch eine auf das mit einem Gewinde versehene Ende des Spulenkerns 20 aufgeschraubte Mutter 47 gesichert.

An der zylindrischen Mantelfläche besitzt der Ventilkörper 46 eine radial umlaufende Ringnut 11, in der ein Dichtring 12 axial beweglich angeordnet ist, der mit seinem äußeren radial umlaufenden Umfang mit Vorspannung an der Innenwand des Zylinders 1 in Anlage ist und an seinem inneren radial umlaufenden Umfang im Bereich des Nutgrundes 13 unterströmbar ist, wobei die der ersten Arbeitskammer 3 zugewandte Nutseitenwand 14 geschlossen und die der zweiten Arbeitskammer 4 zugewandte Nutseitenwand 15 im Bereich des Nutgrundes 13 eine zur zweiten Arbeitskammer 4 führende Strömungsverbindung 16 aufweist.

Ringnut 11 und Dichtring 12 bilden ein zweites Ventil 18.

Bei unbestromten Spulen 29 und 39 wird durch die Schraubendruckfeder 31 der Anker 25 gegen die zweite Dauermagnetscheibe 40 beaufschlagt, so daß damit der Ventildurchgang 9 durch den Spulenkörper 38 verschlossen ist.

Durch die größere Wirkfläche des Kolbens 2 auf seiner der ersten Arbeitskammer 3 zugewandten Seite gegenüber der der zweiten Arbeitskammer 4 zugewandten Seite erfolgt eine kurze Ausfahrbewegung und dadurch ein Schließen des zweiten Ventils 18.

Damit ist der Kolben 2 in dieser Position blockiert.

Wird durch äußere Belastung ein bestimmtes Druckgefälle zwischen den beiden Arbeitskammern 3 und 4 überschritten, so wird eine Verbindung zwischen den beiden Arbeitskammern 3 und 4 geöffnet.

Ist dabei der Druck in der zweiten Arbeitskammer 4 um einen bestimmten Betrag geringer als in der ersten Arbeitskammer 3, öffnet das zweite Ventil 18 durch Bewegen des Dichtrings 12 von einer Anlage an der ersten Nutseitenwand 14 zur zweiten Nutseitenwand 15.

Ist der Druck in der zweiten Arbeitskammer 4 um einen bestimmten Betrag höher als der Druck in der ersten Arbeitskammer 3, wird der einfachwirkende Dichtring 45 durch das Gas im Ventildurchgang 9 überdrückt und von dem Spulenkern 20 abgehoben, so daß der Ventildurchgang 9 geöffnet ist.

Werden die beiden Spulen 29 und 39 bestromt entsteht ein magnetisches Feld, dessen Feldlinien durch die ferromagnetischen Teile Spulenkern 20, Dauermagnetscheiben 36 und 40 sowie Zylinder 1 geschlossen ist. Zur Verstärkung dieses Feldes dienen die einander anziehenden Dauermagnetscheiben 36 und 40.

Durch diese Magnetfelder wird die als Anker 25 dienende zweite Spule 39 mit dem Spulenkörper 38 an die erste Spule 29 herangezogen und damit die Mündungen der Radialbohrungen 42 freigegeben, so daß das Gas von einer Arbeitskammer zur anderen Arbeitskammer strömen kann.

### Bezugszeichenliste

- 1: Zylinder
- 31: Schraubendruckfeder
- 2: Kolben
- 32: Stirnfläche
- 3: erste Arbeitskammer
- 33: Dichtung
- 4: zweite Arbeitskammer
- 34: Ventilschließglied
- 5: Kolbenstange
- 35: Bohrung
- 6: Dichtungs- und Führungspaket
- 36: erste Dauermagnetscheibe
- 7: Halteteil
- 37: Spulenträger
- 8: Grundbohrung
- 38: Spulenkörper
- 9: Ventildurchgang
- 39: zweite Spule
- 10: Verbindungsbohrung
- 40: zweite Dauermagnetscheibe
- 11: Ringnut
- 41: Koaxialbohrung
- 12: Dichtring
- 42: Radialbohrung
- 13: Nutgrund
- 43: Nut
- 14: Nutseitenwand
- 44: Dichtring
- 15: Nutseitenwand
- 45: Dichtring
- 16: Strömungsverbindung
- 46: Ventilkörper
- 17: Führungsring
- 47: Mutter
- 18: zweites Ventil
- 19: Rohr
- 20: Spulenkern
- 21: äußerer Polkern
- 22: Innengewinde
- 23: innerer Polkern
- 24: Außengewinde
- 25: Anker
- 26: Stahlscheibe
- 27: Stahlhülse
- 28: Führungsring
- 29: Spule
- 30: Schleifkontakt

## Patentansprüche

1. Kolben-Zylindereinheit mit einem geschlossenen und mit einem unter Druck stehenden Fluid gefüllten Zylinder, dessen Innenraum durch einen in dem Zylinder axial verschiebbaren Kolben in eine erste und eine zweite Arbeitskammer unterteilt ist, mit einer einseitig an dem Kolben angeordneten Kolbenstange, die durch die zweite Arbeitskammer hindurch und an der einen Stirnseite des Zylinders abgedichtet nach außen geführt ist, wobei ein von der ersten zur zweiten Arbeitskammer führender Durchlaß durch Bestromung eines elektrisch ansteuerbaren Magnetventils öffenbar ist und der Durchlaß und das Magnetventil im Kolben ausgebildet sind sowie der Durchlaß durch ein zwischen einer Schließstellung und einer Öffnungsstellung bewegbar antreibbares Ventilschließglied verschließbar ist, **dadurch gekennzeichnet, daß** das Magnetventil eine fest im Kolben (2) angeordnete, strombeaufschlagbare Spule (29) aufweist, in der ein Spulenkern (20) axial zur Bewegungsrichtung eines Ankers (25) angeordnet ist und der Spulenkern aus einem fest im Kolben (2) angeordneten hülsenartigen äußeren Polkern (21) und einem von dem äußeren Polkern (21) umschlossenen zylinderartigen inneren Polkern (23) besteht, wobei der innere Polkern (23) an seiner äußeren Mantelfläche mit einem Außengewinde (24) versehen ist, mit dem der innere Polkern (23) in ein an der inneren Mantelfläche des äußeren Polkerns (21) ausgebildetes Innengewinde (22) eingeschraubt ist.

2. Kolben-Zylindereinheit mit einem geschlossenen und mit einem unter Druck stehenden Fluid gefüllten Zylinder, dessen Innenraum durch einen in dem Zylinder axial verschiebbaren Kolben in eine erste und eine zweite Arbeitskammer unterteilt ist, mit einer einseitig an dem Kolben angeordneten Kolbenstange, die durch die zweite Arbeitskammer hindurch und an der einen Stirnseite des Zylinders abgedichtet nach außen geführt ist, wobei ein von der ersten zur zweiten Arbeitskammer führender Durchlaß durch Bestromung eines elektrisch ansteuerbaren Magnetventils öffenbar ist und der Durchlaß und das Magnetventil im Kolben ausgebildet sind sowie der Durchlaß durch ein zwischen einer Schließstellung und einer Öffnungsstellung bewegbar antreibbares Ventilschließglied verschließbar ist, **dadurch gekennzeichnet, daß** das Magnetventil eine fest im Kolben (2) angeordnete, strombeaufschlagbare Spule (29) aufweist und ein Anker (25) von einer zweiten strombeaufschlagbaren Spule (39) gebildet ist, wobei von der ersten Spule (29) und der zweiten Spule (39) einander anziehende Magnetfelder erzeugbar sind.

3. Kolben-Zylindereinheit nach einem der Ansprüche 1 oder 2, **dadurch gekennzeichnet, daß** bei unbestromtem Magnetventil und einem eine bestimmte Druckdifferenz überschreitenden Druckgefälle von der zweiten Arbeitskammer (4) zur ersten Arbeitskammer (3) ein erster Ventildurchgang eines ersten Ventils zwischen der ersten Arbeitskammer (3) und der zweiten Arbeitskammer (4) sowie bei unbestromtem Magnetventil und einem eine weitere bestimmte Druckdifferenz überschreitenden Druckgefälle von der ersten Arbeitskammer (3) zur zweiten Arbeitskammer (4) ein zweiter Ventildurchgang eines zweiten Ventils (18) zwischen der ersten Arbeitskammer (3) und der zweiten Arbeitskammer (4) öffenbar ist.

4. Kolben-Zylindereinheit nach Anspruch 3, **dadurch gekennzeichnet, daß** das zweite Ventil (18) **dadurch** gebildet wird, daß der Kolben (2) an seiner zylindrischen Mantelfläche eine radial umlaufende Ringnut (11) aufweist, in der ein Dichtring (12) axial beweglich angeordnet ist, der mit seinem äußeren radial umlaufenden Umfang mit Vorspannung an der Innenwand des Zylinders (1) in Anlage ist und an seinem inneren radial umlaufenden Umfang im Bereich des Nutgrundes (13) unterströmbar ist, wobei die der ersten Arbeitskammer (3) zugewandte Nutseitenwand (14) geschlossen ist und die der zweiten Arbeitskammer (4) zugewandte Nutseitenwand (15) im Bereich des Nutengrundes (13) eine zur zweiten Arbeitskammer (4) führende Strömungsverbindung (16) aufweist.

5. Kolben-Zylindereinheit nach Anspruch 4, **dadurch gekennzeichnet, daß** das zweite Ventil (18) von einer in eine Beaufschlagungsrichtung wirkenden und in die entgegengesetzte Beaufschlagungsrichtung nichtwirkenden Dichtung (12) gebildet ist.

6. Kolben-Zylindereinheit nach einem der Ansprüche 1 bis 5, **dadurch gekennzeichnet, daß** an dem dem Anker (25) abgewandten Ende der ersten Spule (29) ein das Magnetfeld der ersten Spule (29) verstärkender Dauermagnet (36) angeordnet ist.

7. Kolben-Zylindereinheit nach einem der vorhergehenden Ansprüche, **dadurch gekennzeichnet, daß** an dem der ersten Spule (29) abgewandten Ende der zweiten Spule (39) ein das Magnetfeld der zweiten Spule (39) verstärkender zweiter Dauermagnet (40) angeordnet ist.

8. Kolben-Zylindereinheit nach einem der vorhergehenden Ansprüche, **dadurch gekennzeichnet, daß** der Durchlaß (9) in einem ankerseitigen, zylindrischen Bereich des Kolbens (2) radial nach außen mündet, wobei der zylindrische Bereich von dem ringförmig ausgebildeten Schließglied umschlossen und zwischen einer die Mündung des Durchlasses (19) abdeckenden Schließstellung und einer die Mündung freilassenden Öffnungsstellung axial bewegbar ist und wobei das Schließglied durch den federbelasteten Anker (25) in Schließrichtung beaufschlagt ist.

9. Kolben-Zylindereinheit nach Anspruch 1, **dadurch gekennzeichnet, daß** der Anker (25) von einer am Spulenkern (20) abgestützten Druckfeder in Schließrichtung des Ventilschließglieds beaufschlagt ist und die Druckfeder an der ihr zugewandten ringartigen Stirnseite (32) des äußeren Polkerns (21) abgestützt ist.

10. Kolben-Zylindereinheit nach einem der vorhergehenden Ansprüche, **dadurch gekennzeichnet, daß** die Spule (29, 39) von einem Magnetfeldführungsrohr umschlossen ist, wobei der Zylinder (1) das Magnetfeldführungsrohr bildet.
